(19) **Europäisches Patentamt**

**European Patent Office**

**Office européen des brevets**

(11) Veröffentlichungsnummer: **0 359 913**
**A2**

(12) EUROPÄISCHE PATENTANMELDUNG

(21) Anmeldenummer: **89111183.3**

(22) Anmeldetag: **20.06.89**

(51) Int. Cl.⁵: **F16L 41/03 , F24D 3/10**

(30) Priorität: **22.09.88 DE 3832154**

(43) Veröffentlichungstag der Anmeldung:
**28.03.90 Patentblatt 90/13**

(84) Benannte Vertragsstaaten:
**AT BE CH DE ES FR GB GR IT LI LU NL SE**

(71) Anmelder: **Maile + Grammer GmbH**
**Kornstrasse 1**
**D-7407 Rottenburg 15(DE)**

(72) Erfinder: **Grammer, Meinrad**
**Geigerweg 4**
**D-7407 Rottenburg 15(DE)**

(74) Vertreter: **Ott, Elmar, Dipl.-Ing. et al**
**Patentanwalt Ott und Partner Kappelstrasse**
**8**
**D-7240 Horb 1(DE)**

(54) Heizungsverteiler mit horizontal abgehenden Anschlussstutzen.

㉗ Es wird ein Heizungsverteiler mit horizontal abgehenden Anschlußstutzen beschrieben, der durch die Verwendung von Eckventilen und unter Verwendung von konischen Anschlußstutzen sehr raumsparend ausgebildet ist. Der abstehende Anschlußflansch der Eckventile bildet dabei den Anschluß für vertikale Rohrleitungen einer Heizungsanlage.

Fig. 2

EP 0 359 913 A2

## Heizungsverteiler mit horizontal abgehenden Anschlußstutzen

Die Erfindung betrifft einen Heizungsverteiler mit horizontal abgehenden Anschlußstutzen gemäß der Gattung des Hauptanspruchs.

Heizungsverteiler werden in Heizungsanlagen für den Anschluß mehrerer Heizkreise benötigt. Dabei ist es bekannt, die im Querschnitt rechteckig ausgebildeten Heizungsverteiler mittels einer in Längsrichtung verlaufenden inneren Trennwand in eine Vorlaufkammer und eine Rücklaufkammer zu unterteilen. Die seitlich abgehenden Anschlußstutzen können somit abwechselnd zur Vorlaufkammer und zur Rücklaufkammer geführt werden. Der Wärmeträger kann somit vom Heizkessel in die Vorlaufkammer eingespeist werden, von wo er über die dort abgehenden Anschlußstutzen in die verschiedenen Heizkreise gelangt, wobei die Rückführung des Wärmeträgers über die mit der Rücklaufkammer verbundenen Anschlußstutzen erfolgt. Die Rücklaufkammer ist mit dem Rücklauf des Heizkessels verbunden.

Aus der DE-PS 2 116 982 ist ein Heizungsverteiler mit senkrecht abgehenden Anschlußstutzen bekannt, der konische Anschlußstutzen verwendet, um eine einheitliche Spindelhöhe für unterschiedlich große Anschlußarmaturen, wie Absperrventile oder dergleichen, zu erhalten. Häufig besteht jedoch die Forderung, besonders raumsparend eine Vielzahl von Anschlußstutzen auf engstem Raum vorzusehen, weshalb hierfür sogenannte Stierkopfverteiler Verwendung finden, die an gegenüberliegenden Seiten abgehende waagrechte Anschlußstutzen aufweisen, welche über Rohrbogen nach oben zu Anschlußflanschen führen. Im Querschnitt stehen die Anschlußstutzen wie seitliche Hörner ab, weshalb für derartige bekannte Heizungsverteiler die Bezeichnung Stierkopfverteiler üblich wurde.

An den Stierkopfverteiler kann eine Vielzahl von senkrechten Rohrleitungen über Absperrventile oder dergleichen angeschlossen werden. Dieser bekannte Heizungsverteiler hat jedoch den Nachteil, daß jeder Rohranschluß aus einem kurzen waagerechten Rohrabschnitt besteht, an den ein Rohrbogen angeschweißt werden muß, der über ein zweites oberes, angeschweißtes Rohrstück zu einen aufgeschweißten Anschlußflansch führt. Es sind somit eine Vielzahl von Schweißnähten erforderlich und die gesamte Anordnung erfordert verhältnismäßig viel Platz. Damit sämtliche Absperrventile, die auf die Anschlußflansche motiert werden, auch bei unterschiedlicher Baugröße eine einheitliche Spindelhöhe erhalten, ist jeweils eine Anpassung der Höhe der Anschlußflansche erforderlich, wodurch sich ein beträchtlicher Arbeitsaufwand ergibt.

Der Erfindung liegt die Aufgabe zugrunde, einen Heizungsverteiler mit horizontal, an gegenüberliegenden Seiten abgehenden Anschlußstutzen zu schaffen, der raumsparend mit Anschlußarmaturen für den Anschluß vertikal verlaufender Rohrleitungen versehen werden kann.

Die Lösung dieser Aufgabe wird bei einem Heizungsverteiler der eingangsgenannten Gattung durch die im Hauptanspruch angegebenen Merkmale erhalten. Durch die Kombination von seitlich, gerade abstehenden Anschlußstutzen mit daran montierten Eckventilen wird eine kompaktere Bauweise gegenüber herkömmlichen, sogenannten Stierkopfverteilern, erreicht. Außerdem werden pro Anschlußstutzen am Verteilergehäuse und im Bereich des Anschlußflansches jeweils eine Schweißnaht benötigt, während bei herkömmlichen Verteilern die Anschlußstutzen wegen der erforderlichen Rohrbogen jeweils vier Schweißnähte erfordern. Es wird somit beim erfindungsgemäßen Heizungsverteiler Material, Arbeitsaufwand und Platzbedarf eingespart. Außerdem befinden sich ohne zusätzliche Maßnahmen sämtliche Spindeln der montierten Ventile auf einheitlicher Spindelhöhe. Durch die Verwendung einer chronischen Verjüngung am abstehenden Ende der Anschlußstutzen ist es weiterhin möglich, die Anschlußstutzen im konischen Bereich entsprechend dem jeweils anzuschließenden Flanschdurchmesser so abzulängen, um den Querschnitt an den Flanschdurchmesser anzupassen. Bei einsprechender Neigung des konischen Bereichs wird dabei gleichzeitig eine Längenanpassung des Anschlußstutzens erreicht, die zur Folge hat, daß sämtliche nebeneinander montierten Eckventile mit der Mittelachse ihrer abgehenden Flansche in einer gemeinsamen Ebene zu liegen kommen, und zwar unabhängig von der jeweils erforderlichen Baugröße des Eckventils, die bekanntlich von der Nennweite der anzuschließenden Rohrleitungen abhängt. Die Ausbildung der Neigung des konischen Bereichs der Anschlußstutzen ist mit der Maßgabe auszuführen, wie dies bereits in der der DE-PS 2 116 982 beschrieben ist. Jedoch wird dort nicht eine einheitliche Flanschmitte erzielt, sondern eine einheitliche Spindelhöhe für benachbarte Anschlußarmaturen.

Bei Verwendung von Eckventilen, die in ihren Abmessungen der DIN 3202 entsprechen, kann der Neigungswinkel der konischen Verjüngung 19° betragen, um bei quer schnittsgerechter Ablängung gleichzeitig die gewünschte einheitliche Ausrichtung der abgehenden Flansche zu erhalten. Dabei können sämtliche Anschlußstutzen für unterschiedlich große Eckventile einen gleichlangen, geraden Rohrabschitt und einen jeweils gleichermaßen geneigten Konus haben.

Die Erfindung wird nachfolgend anhand der Zeichnung näher erläutert. Es zeigen:

Figur 1 einen Heizungsverteiler nach dem Stand der Technik,

Figur 2 einen erfindungsgemäßen Heizungsverteiler im Querschnitt und

Figur 3 die Draufsicht auf einen erfindungsgemäßen Heizungsverteiler.

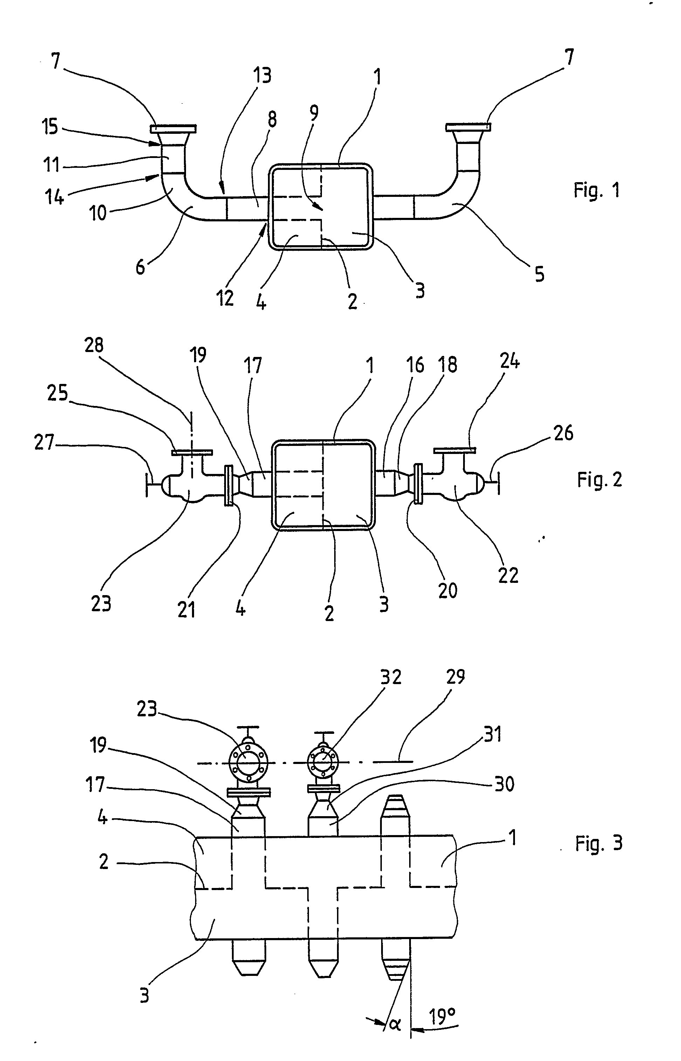

Der in Figur 1 dargestellte Heizungsverteiler ist seit mehreren Jahren unter der Bezeichnung Stierkopfverteiler bekannt. Sein Verteilergehäuse 1 ist im Innern durch eine senkrechte Trennwand 2 in eine Vorlaufkammer 3 und eine Rücklaufkammer 4 unterteilt. Die beiden dargestellten seitlichen Anschlüsse 5, 6 besitzen nach oben gerichtete Anschlußflansche 7 für den Anschluß hier nicht dargestellter vertikal verlaufender Rohrleitungen. Beide Anschlußleitungen 5, 6 führen zur Vorlaufkammer 3, wobei der linke Anschlußstutzen 8 durch die Rücklaufkammer 4 bis zu einer Öffnung 9 der Trennwand 2 geführt ist.

Die beiden Rohranschlüsse 5, 6 bestehen jeweils aus einem geraden Anschlußstutzen 8, einem Rohrbogen 10, einem weiteren geraden Rohrstück 11 und einem Anschlußflansch 7. Demzufolge sind am Verteilergehäuse 1 eine Schweißnaht 12 und weitere Schweißnähte 13, 14, 15 erforderlich. Selbstverständlich muß der durch die Rücklaufkammer 4 geführte Anschlußstutzen 8 außerdem im Bereich der Öffnung 9 mit der Trennwand 2 verschweißt werden.

Der in Figur 1 dargestellte Stierkopfveteiler erfordert einen hohen Platzbedarf und ist arbeitsaufwendig in seiner Herstellung.

In Figur 2 ist der sehr kompakt ausgebildete erfindungsgemäße Heizungsverteiler gezeigt, der an gegenüberliegenden Seiten waagerecht abstehende Anschlußstutzen 16, 17 besitzt. An einen geraden Rohrabschnitt der Anschlußstutzen 16, 17 schließt sich ein konischer Teil 18, 19 an, der zu den Anschlußflanschen 20, 21 führt. An den Anschlußflanschen 20, 21 sind Eckventile 22, 23 montiert, deren abstehende Anschlußflansche 24, 25 nach oben zeigen. Ihre Spindeln 26, 27 befinden sich auf einheitlicher Spindelhöhe unabhänig von der jeweiligen Baugröße der Eckventile 22, 23.

Durch die Verwendung von Anschlußstutzen 16, 17 mit konischer Verjüngung 18, 19 wird erreicht, daß je nach Baugröße der verwendeten Eckventile 22, 23 lediglich beim entsprechenden Querschnitt im konischen Bereich der Anschlußstutzen 16, 17 abgelängt werden muß. Dadurch wird die gewünschte Querschnittsanpassung erreicht. Außerdem erhält man dadurch eine Ausrichtung der Mittelachse 28 sämtlicher nebeneinander angeordneter Eckventile in der Weise, daß die Mittelachsen sämtlicher auf einer Seite des Heizungsverteilers herausgeführter Eckventile in einer gemeinsamen Ebene liegen. Diese Ebene verläuft parallel zum Verteilergehäuse 1.

In Figur 3 ist der Verlauf dieser gemeinsamen Ebene 29 dargestellt. Die Anschlußstutzen 17, 30 sind im konischen Bereich 19, 31 bei unterschiedlichem Querschnitt abgelängt, wodurch sich die erforderliche Querschnitt-und Längenanpassung an die unterschiedlich großen ECkventile 23, 32 ergibt.

Die konischen Bereiche 19, 31 besitzen alle den gleichen Neigungswinkel α , der im dargestellten Ausführungsbeispiel 19° beträgt.

## Ansprüche

1. Heizungsverteiler mit horizontal, an gegenüberliegenden Seiten abgehenden Anschlußstutzen (16, 17), die Anschlußelemente für den Anschluß vertikal verlaufender Rohrleitungen aufweisen, und dessen langgestrecktes Verteilergehäuse (1) vorzugsweise mittels einer Trennwand (2) in eine Vorlaufkammer (3) und eine Rücklaufkammer (4) unterteilt ist, dadurch gekennzeichnet, daß die Anschlußstutzen (16, 17) gerade von Verteilergehäuse (1) abstehen und zu ihrem abstehenden Ende hin über eine konische Verjüngung (18, 19) zu einem Anschlußflansch (20, 21) führen, an dem ein Eckventil (22, 23) montiert ist.

2. Heizungsverteiler nach Anspruch 1, dadurch gekennzeichnet, daß die konische Verjüngung einen Neigungswinkel zwischen 15° und 25°, vorzugsweise zwischen 18° und 20°, hat.

3. Heizungsverteiler nach einem der Ansprüche 1 oder 2, dadurch gekennzeichnet, daß für unterschiedlich große Eckventile (23, 32) alle Anschlußstutzen (17, 30) einen gleichlangen geraden Rohrabschnitt und einen Konus (19, 31) mit gleichem Neigungswinkel haben, und daß die Mittelachse (28) der abstehenden Flansche (25) sämtlicher nebeneinander angeord neter Eckventile (23, 32) unterschiedlicher Baugrößen in einergemeinsamen vertikal verlaufenden Ebene (29) liegen, die parallel zur Längsachse des Verteilergehäuses (1) verläuft.

Fig. 1

Fig. 2

Fig. 3